# EUROPEAN PATENT SPECIFICATION

(11) **EP 4 423 406 B1**
(45) Date of publication and mention of the grant of the patent: **03.12.2025**
(21) Application number: 22809510.5
(22) Date of filing: 24.10.2022
(51) Int. Cl.: F16F 15/067, F16F 7/00, F16F 1/12, B64G 1/64

(54) **DAMPING DEVICE AND CONNECTING APPARATUS**
DÄMPFERVORRICHTUNG UND VERBINDUNGSVORRICHTUNG
DISPOSITIF AMORTISSEUR ET APPAREIL DE CONNEXION

(30) Priority: 25.10.2021 IT 202100027338
(43) Date of publication of application: 04.09.2024
(73) Proprietor: Universita' Degli Studi Di Padova, 35122 Padova (IT)
(72) Inventor: LORENZINI, Enrico, 35121 Padova PD (IT); OLIVIERI, Lorenzo, 35126 Padova PD (IT); VALMORBIDA, Andrea, 37040 Terrazzo VR (IT); BRUNELLO, Alice, 36071 Arzignano VI (IT); SAREGO, Giulia, 35132 Padova PD (IT)
(74) Representative: Pozzato, Matteo
(86) International application number: PCT/IB2022/060199
(87) International publication number: WO 2023/073533

(56) References cited:
- CN-A- 113 044 248
- CN-A- 113 044 249
- JP-A- H04 159 199
- OLIVIERI L ET AL: "An in-line damper for tethers-in-space oscillations dissipation", ACTA ASTRONAUTICA, PERGAMON PRESS, ELMSFORD, GB, vol. 189, 14 September 2021 (2021-09-14), pages 559 - 566, XP086819697, ISSN: 0094-5765, [retrieved on 20210914], DOI: 10.1016/J.ACTAASTRO.2021.09.012

## Description

The present disclosure generally relates to the technical field of damper devices, specifically to a damper device configured to dissipate energy from a cable. In detail, the present disclosure relates to a damper device for space applications. More specifically, the present disclosure relates to a damper device configured to dissipate energy from a connecting cable configured to mechanically connect two satellite modules. The damper device according to the present disclosure is further configured to electrically connect said two satellite modules. The present disclosure further relates to a connecting apparatus of two satellite modules.

In the space field, satellite wire systems are well known. Such systems advantageously exploit a propulsion system that does not consume propellant, taking advantage of the interaction with the earth's magnetic field and the earth's ionosphere, comprising ionized gas rich of free electrons.

In detail, wired satellite systems comprise a first satellite, or base satellite, and a second satellite, or auxiliary satellite, connected by a conducting cable. The first satellite, or base satellite, and the second satellite, or auxiliary satellite, are arranged, in use, aligned along the earth's radial, and connected via the conducting cable. By polarizing the electric field along the conducting cable due to its motion in the magnetic field, the satellite that is furthest from the Earth or similarly part of the uninsulated conducting wire collects electrons from the ionosphere, thus acting as an anode. These electrons are transferred to the other satellite, which is closer to Earth which thus acts as a cathode, through the conducting wire. The electrons, circulating in the conducting cable then generate an electric current that, by Lorentz's law, interacts with the Earth's magnetic field, generating a force that can, for example, be used to slow down the satellite system, for example for the purpose of a reentry of the satellite into Earth orbit. Advantageously, unlike other methodologies for reentering satellites from orbit, such as sails or other systems that increase aerodynamic drag, cable-based satellite systems are capable of producing significant forces, in the order of magnitude of a Newton, without the use of propellant.

The size of the satellite system thus composed can vary greatly, depending on the amount of current, and consequently force, to be produced. In particular, the length of the conducting cable can vary from several hundred meters up to several kilometers. The resulting system can therefore be extremely dynamic, particularly at the conducting cable, which tends to oscillate and consequently destabilize the entire satellite system. It is therefore of foundamental importance to dissipate the energy stored in the cable connecting the two satellites, while at the same time ensuring an effective electrical connection between them.

Techniques for dissipating the energy of the connecting cable are known nowadays, but they suffer from several disadvantages.

For example, active energy dissipation techniques are known to accurately measure parameters such as oscillation phases and current level, consequently acting on the current itself in order to generate negative work aimed at damping the oscillations. This type of known technique, while effective, requires very advanced and complex sensors.

Document XP086819697 (OLIVIERI, L. ET AL: "An in-line damper for tethers-in-space oscillations dissipation", ACTA ASTRONAUTICA, PERGAMON PRESS, ELMSFORD, GB, vol. 189, 14 September 2021, pages 559-566) discloses a damper device configured to dissipate energy from at least one connecting cable configured for connecting a first satellite module and a second satellite module, said damper device being configured for a mechanical and electrical connection between said first satellite module and said second satellite module, said damper device comprising a main body configured to be coupled to an end portion of said connecting cable, said main body of said damper device comprising an elastic element, said elastic element being associated with said end portion of said connecting cable, said main body defining a groove, or recess, configured to accommodate said elastic element, the main body being further configured to be coupled to at least one electrical connecting element configured to electrically connect said first satellite module with said second satellite module. Document CN113044249A discloses a known tether with a damper device.

Thus, the present disclosure starts from the position of the technical problem of providing a damper device to meet the above mentioned needs with reference to the known technique, and to overcome the aforementioned drawbacks and/or to achieve additional benefits.

This is achieved by means of a damper device and a connecting apparatus according to the respective independent claims. Secondary features of the present disclosure are defined in the corresponding dependent claims.

This disclosure was funded by European funds (EC H2020 FET-OPEN Grant Agreement No. 828902 (E.T.PACK)).

The damper device according to the present disclosure is configured to dissipate energy from at least one connecting cable configured for connecting a first satellite module and a second satellite module. In particular, the damper device is configured for a mechanical and electrical connection between the first and second satellite modules. In detail, the damper device includes a main body configured to be coupled to an end portion of the connecting cable. Said end portion of the connecting cable is coupled to an elastic element configured to dissipate energy and to assume at least a first configuration, or elongated configuration, or rest configuration, and a second configuration, or contracted configuration. The main body defines a groove, or recess, configured to accommodate the elastic element, which is at least partially slidable in that groove or recess. The main body is also configured to be coupled to at least one electrical connecting element configured to electrically connect the first satellite module with the second satellite module.

It follows that, advantageously, the damper device is able to dissipate energy stored in the connecting cable between the first and second satellite modules, particularly through the elastic element arranged in the groove of the main body. In other words, the connecting cable is a cable or ribbon, preferably configured to carry a mechanical load, that mechanically connects the first and second satellite modules. Energy from the dynamics of the overall satellite system is stored in such a cable, but can be dissipated through the sliding of the elastic element of the damper device. The latter also ensures, through the at least one electrical connecting element, the flow of current between the two satellite modules. Preferably, the at least one electrical connecting element is not configured to carry a mechanical load. For this reason, the length of the at least one electrical connecting element may be longer than that of the connecting cable.

Moreover, the groove, or recess, has a curvilinear, or non-rectilinear shape, or is conformed as a hook, or question mark. As a result, advantageously, the size of the main body of the damper device can be contained, while maintaining a good length of the groove and thus an effective excursion of the elastic element, which promotes energy dissipation of the connecting cable. In other words, the non-rectilinear, or hooked, or question mark configuration of the groove allows the size of the main body to be reduced for the same elastic element excursion capacity in the case of a straight groove.

According to one aspect of the present disclosure, the elastic element can be slidable in the groove between the first configuration and the second configuration. Specifically, the elastic element, in the first configuration, or rest configuration, occupies a first space in the groove, while in the second configuration it occupies a second space, which is less than the first space. Preferably, the elastic element is a spring, preferably a compression or tension spring.

According to a further aspect, the elastic element may comprise a first end portion constrained to the groove and a second end portion configured to slide into the groove. Such second end portion may be associated with the end portion of the connecting cable. Advantageously then, stresses in the connecting cable can be dissipated through the elastic element. In detail, such stresses can be dissipated through a sliding of the second end portion of the elastic element, with which the end portion of the connecting cable is associated, within the groove. In other words, sliding of the second end portion of the elastic element, due to movements of the connecting cable, results in shortening or elongation of the elastic element itself within the groove. Such friction-prone movements of the elastic element allow dissipation of energy stored in the connecting cable.

According to one aspect of the present disclosure, the elastic element may be associated with at least one sliding element, preferably associated with the second end portion of the elastic element. The at least one sliding element may be configured to promote a sliding of the second end portion of the elastic element in the groove. In other words, the sliding element, such as a spherical element, promotes movement of the elastic element, and consequently of the connecting cable, within the groove.

According to one aspect of the present disclosure, the main body can be a multilayer body comprising a first element, a second element and a third element superimposed on each other, with the second element interposed between the first and third elements. It follows that, advantageously, the damper device is easy to fabricate.

In detail, according to a further preferred aspect, the second element and the third element of the main body can be coupled together and configured to mechanically connect the first and second satellite modules through the connecting cable, and to dissipate energy from the latter. According to this aspect, the first and second elements can be coupled with each other and configured to electrically connect the first and second satellite modules through at least one electrical connecting element. Advantageously then, the mechanical and electrical connection between the two satellite modules through the damper device according to the present disclosure are decoupled, or separated from each other. This considerably improves the reliability of the damper device and facilitates any maintenance work related, in particular, to the electrical or mechanical connection within the main body of the damper device.

According to a preferred aspect of the present disclosure, the second and third elements of the main body can define the groove, or recess, configured to accommodate the elastic element.

Also, according to a further aspect, an electromechanical connecting element configured to connect a first satellite module to the damper, and an electrical connecting element configured to connect the damper to a second satellite module, may be interposed between the first element and the second element of the main body. According to this aspect, the first and second elements can be configured to ensure a contact between the electromechanical connecting element and the electrical connecting element.

The present disclosure has as its further object a connecting apparatus between a first satellite module and a second satellite module. Said connecting apparatus includes a damper device mechanically coupled to the first satellite module, a connecting cable configured to mechanically connect the damper device to the second space module and to support a mechanical load, an electromechanical connecting element configured to electrically connect the first satellite module with the damper device, and an electrical connecting element configured to electrically connect the second satellite module with the damper device.

Further advantages, features and the manner of use of the object of the present disclosure will be evident from the following detailed description of its forms of embodiment, presented for illustrative and non-limiting purposes.

However, it is evident how each form of realization of the object of the present disclosure may present one or more of the advantages listed above; in any case, it is not required that each form of realization simultaneously present all the advantages listed.

Reference will be made to the figures in the attached drawings, wherein:
- Figures 1 shows a schematic view of a connecting apparatus including a damper device according to one aspect of the present disclosure;
- Figure 2 shows a schematic view of a damper device according to one aspect of the present disclosure;

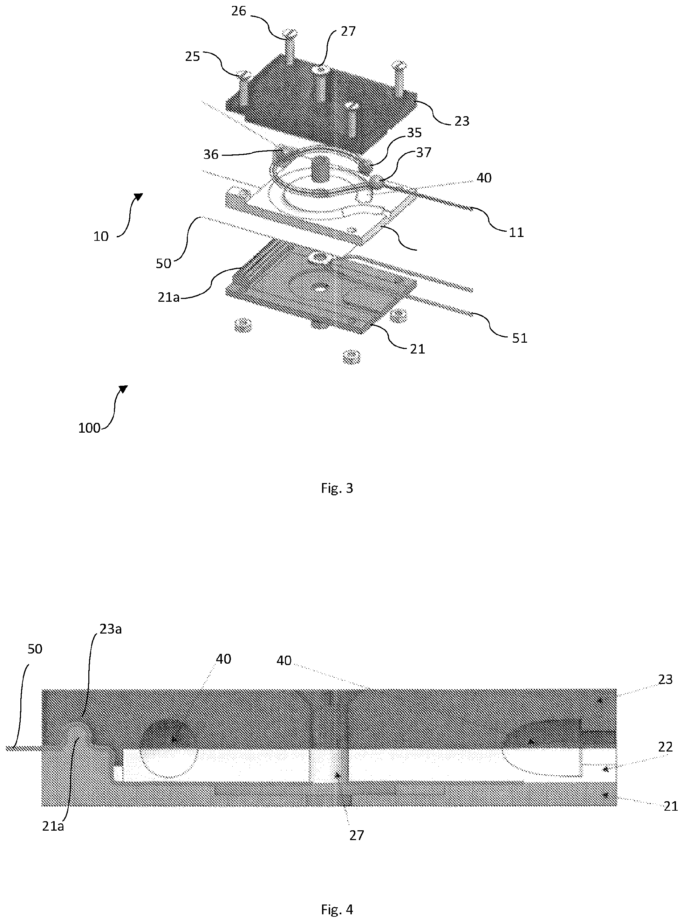

- Figure 3 shows an exploded view of a damper device according to an aspect of the present disclosure;
- Figure 4 shows a sectional view of a damper device according to an aspect of the present disclosure.

In detail, with particular reference to the attached figures, the present disclosure relates to a damper device 100.

In the context of the present disclosure, the term "damper device" means a device capable of dissipating energy, particularly mechanical energy stored in a cable. In detail, the damper device 100 according to the present disclosure is configured to dissipate energy from at least one connecting cable 10. In other words, the damper device 100 is configured to dissipate energy stored in such a connecting cable 10, thereby, for example, reducing oscillations of an overall system connecting two space modules. Said still differently, the damper device 100 is configured to reduce oscillations and improve the dynamic stability of a system in which a connecting cable connects two different devices in relative motion with each other.

Preferably, the connecting cable 10 is configured to connect a first satellite module 200 with a second satellite module 300. In other words, the connecting cable 10 is part of a connecting system designed to mechanically connect such first and second satellite modules 200, 300. Preferably, the connecting cable 10 is configured to withstand mechanical loads on the order of tens of Newtons. In other words, the connecting cable 10 is configured to keep, in use, the first satellite module 200 and the second satellite module 300 connected without breaking.

Even more specifically, the damper device 100 is configured to connect the first satellite module 200 and the second satellite module 300. In other words, in use, the damper device 100 is interposed between the first and second satellite module 300.

Specifically, the damper device 100 is configured to be associated with connecting cable 10, which in turn is associated with the second satellite module 300. In other words, the connecting cable 10 is configured to connect the second satellite module 300 to the damper device 100 so that stresses in the connection between the first and second satellite modules 200, 300, particularly accumulated in the connecting cable 10, can be damped by the damper device 100.

The damper device 100 is also configured to be associated with an electromechanical connecting element 50, which in turn is associated with the first satellite module 200. In other words, the electromechanical connecting element 50 is configured to connect the first satellite module 200 to the damper device 100. Preferably, the electromechanical connecting element 50 is configured to mechanically and electrically connect the first satellite module 200 to the damper device 100. In other words, the electromechanical connecting element 50 is configured to perform both mechanical and electrical connection functions between the first satellite module 200 and the damper device 100.

Preferably, the total length of the connection between the first satellite module 200 and the second satellite module 300 can be between 500 m and 3 km. Preferably also, the connecting cable 10 is a high-strength braided rope, such as made of high molecular weight polyethylene, e.g., Spectra^{™}. Preferably, the connecting cable 10 is configured to elongate slowly when subjected to mechanical loads. Alternatively, the connecting cable 10 can be made of Kevlar^{™}.

The damper device 100 is configured not only for a mechanical type connection between the first satellite module 200 and the second satellite module 300, through the connecting cable 10, but also for an electrical connection between such first satellite module 200 and the second satellite module 300. In other words, through the damper device 100, mechanical and electrical continuity is ensured between the first satellite module 200 and the second satellite module 300.

Preferably, the damper device 100 is configured to be arranged in close proximity to the second satellite module 300.

In detail, the damper device 100 includes a main body 20 configured to be coupled to an end portion 11 of the connecting cable 10. The main body 20 further includes an elastic element 30 configured to dissipate energy from said connecting cable 10. In detail, the elastic element 30 is configured to assume at least a first configuration, or elongated configuration, or rest configuration, and a second configuration, or contracted configuration. Preferably, the elastic element 30 is a spring, preferably a compression spring. Alternatively, the elastic element 30 may be a tension spring. Preferably also, the elastic element 30 in the second configuration, or contracted configuration, is configured to dissipate energy from the connecting cable 10. In other words, the transition of the elastic element 30 from the first configuration, or rest configuration, to the second configuration, or contracted configuration, results in an absorption of mechanical energy from the connecting cable 10, and thus a dissipation of energy from the latter. In addition, the energy stored in the connecting cable 10 is dissipated through the friction created in the sliding of the elastic element 30 with the walls of the groove 40. In other words, the energy stored in the connecting cable 10 configured to connect two space modules is dissipated through the sliding friction between the elastic element 30 and the groove, or recess, 40. Specifically, energy dissipation occurs through the contact, at least partially crawling, between the elastic element 30 and the groove 40. For this purpose, the elastic element 30 is associated with the end portion 11 of the connecting cable. Preferably, in detail, the end portion 11 of the connecting cable 10 is inserted within the elastic element 30, preferably in the form of a spring, preferably a compression or tension spring. Specifically, the end portion 11 of the connecting cable 10 is associated with a second end portion 32 of the elastic element 30.

The main body 20 defines a groove 40, or recess, configured to accommodate the elastic element 30. In other words, the groove 40 is a hollow portion within the main body 20 configured to receive within it the elastic element 30, preferably in the form of a spring, preferably a compression or tension spring. The elastic element 30 is at least partially slidable in such a groove 40.

In order to dissipate energy from the connecting cable 10, the elastic element 30 is at least partially slidable in that groove 40. In detail, elastic element 30 is slidable in groove 40 between its first configuration, or rest configuration, and its second configuration, or contracted configuration. More specifically still, elastic element 30 in the first configuration occupies a first space in groove 40, while in the second configuration it occupies a second space, of a different size from the first space, in the groove 40 itself. In more detail, the second space occupied by elastic element 30 in groove 40 is smaller than the first space. In other words, elastic element 30 in the second configuration is contracted, within groove 40, compared with the first configuration, or rest configuration. In this way, the damper device 100, dissipates mechanical energy from the connecting cable 10 through the sliding of the elastic element 30, with which the connecting cable 10 itself is associated.

In more detail, the elastic element 30, preferably a spring, preferably a compression or tension spring, comprises a first end portion 31 and a second end portion 32. The first end portion 31 is preferably constrained to the groove 40. In other words, the first end portion 31 of the elastic element 30 is not slidable, or movable, within the groove 40. Instead, the second end portion 32, preferably associated with the end portion 11 of the connecting cable 10, is configured to slide into the groove 40 of the main body 100. Preferably, the first end portion 31 of the elastic element 30 is interposed, in use, between the second end portion 32 of the elastic element 30, and the connecting cable 10. In other words, the connecting cable 10, and in detail its end portion 11, is slidable in the groove 40, at least between a position of maximum insertion of the connecting cable 10 within the groove 40, corresponding to the first configuration, or rest configuration, of the elastic element 30, and a position of minimum insertion of the connecting cable into the groove 40, corresponding to the second configuration, or contracted configuration, of the elastic element 30. In such second configuration, or configuration of minimum insertion of the connecting cable 10 into the groove 40, the second end portion 32 of the elastic element 30 is in close proximity to, or adjacent to, or in contact with the first end portion 31 of the elastic element 30 itself.

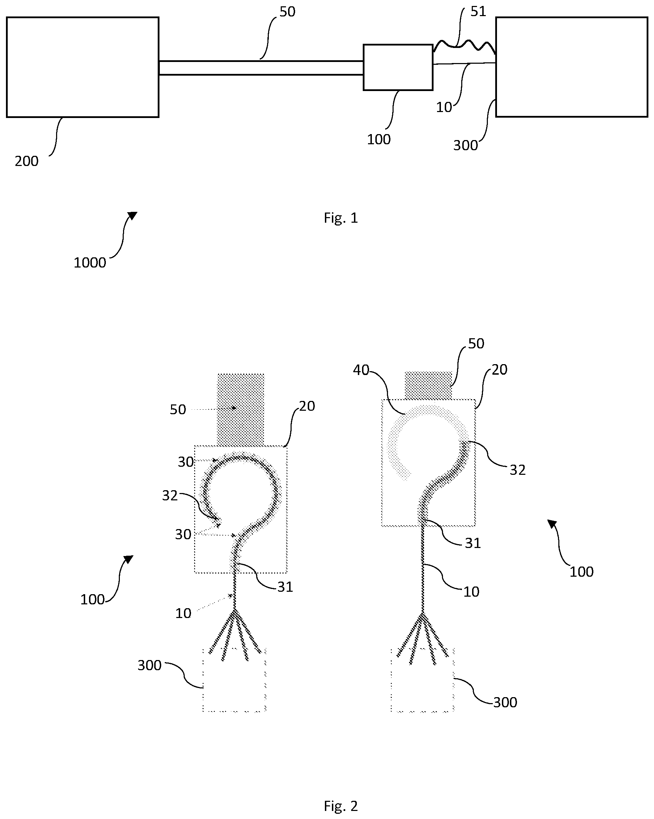

In order to promote sliding of the elastic element 30, particularly its second end portion 32, in the groove 40, the elastic element 30 may be associated with at least one sliding element 35. Preferably, the at least one sliding element 35 is a spherical, or ball-shaped conformed element configured to promote a sliding of the elastic element 30 in the groove 40. In detail, the at least one sliding element 35 is associated with the second end portion 32 of the elastic element 30 and is configured to facilitate, or promote, sliding of said second end portion 32 into the groove 40. Preferably, the sliding element 35 is configured to limit vibration of the elastic element 30 in the groove 40, preferably at least during launch, or take-off of the one or more space modules. Preferably, the sliding element 35 is further associated with, or coupled to, the end portion 11 of the connecting cable 10. Preferably, the elastic element 30 is associated with a plurality of sliding elements 35, 36, 37. Preferably also, the first end portion 31 of the elastic element 40 is associated with a sliding element 37, preferably constrained to the groove 40. This advantageously prevents a release of the connecting cable 10 from the groove 40, or a detachment of the connecting cable 10 from the main body 100. Specifically, Figure 2 shows a configuration of the damper device 100 in which the elastic element 30 is in the first configuration, occupying the entire groove 40, and a configuration of the damper device 100 in which the elastic element 30 is in the second configuration, occupying only partially the groove 40.

Preferably, the groove 40 has a curvilinear, or non-rectilinear shape, or is conformed as a hook, or question mark. It advantageously follows that the main body 100 can be small in size while allowing good excursion of the elastic element 30.

The damper device 100 according to the present disclosure, in addition to being configured for a mechanical connection between the first satellite module 200 and the second satellite module 300, is further configured for an electrical connection between the first satellite module 200 and the second satellite module 300. According to this aspect, the main body 20 is configured to be coupled to at least one electrical connecting element 50, 51, which is configured to electrically connect the first satellite module 200 with the second satellite module 300 through said main body 20 of the damper device 100. More specifically, the damper device 100, in detail the main body 20, is configured for an electrical connection with a first satellite module 200 through the electromechanical connecting element 50. In addition, the damper device 100, in detail the main body 20, is configured for an electrical connection with a second satellite module 300 through an electrical connecting element 51. The electromechanical connecting element 50 and the electrical connecting element 51 are electrically coupled to each other in order to provide a continuity of electrical connection, in use, between the first satellite module 200 and the second satellite module 300. Preferably, the electrical connecting element 51 is not configured to carry a mechanical-type load. Consequently, at least the electrical connecting element 51 has a greater length than the connecting cable 10. Said electrical connecting element 51, configured to connect the damper device 100 with the second satellite module 300, includes at least one insulated and electrically conductive cable. Preferably, the electromechanical connecting element 50 is a conductive tape, and the electrical connecting element 51 is an insulated electrical cable.

According to one aspect of the present disclosure, the main body 20 is a multilayer body comprising a first element 21, a third element 23 and a second element 22 interposed between the first element 21 and the third element 23. The first, second and third elements are superimposed on each other. Preferably also, the main body 20 is made of a nonconductive material, such as polytetrafluoroethylene. Preferably, each of the first, second and third elements 21, 22 and 23 are made of non-conductive material, for example polytetrafluoroethylene. Preferably, the first, second and third elements 21, 22, 23 are connected to each other by means of connecting means 25, 26, 27, such as by screws and bolts.

In more detail, the second element 22 and the third element 23 are coupled together and configured to mechanically connect a first satellite module and a second satellite module, 200, 300, through a connecting cable 10 and to dissipate energy from the latter. Specifically, the second element 22 and the third element 23 are coupled together and configured to define the groove 40 configured to accommodate the elastic element 30 and the end portion 11 of the connecting cable 10.

On the other hand, the first element 21 and the second element 22 of the main body 20 are coupled together and configured to electrically connect a first satellite module 200 and a second satellite module 300 via the electromechanical connecting element 50 and the electrical connecting element 51.

In detail, the electromechanical connecting element 50 configured to connect both electrically and mechanically a first satellite module 200 to the damper device 100 and the electrical connecting element 51 configured to electrically connect a second satellite module 300 with the damper device 100 are interposed between the first element 21 and the second element 22 of the main body 20. Preferably, such first and second elements 21, 22 are configured to provide a contact, preferably an electrical contact, between the electromechanical connecting element 50 and the electrical connecting element 51. Preferably, the first and second elements 21, 22 of the main body 20 of the damper device 100 are configured to create a compressive load to the respective electrical connecting elements, particularly to the electromechanical connecting element 50 and the electrical connecting element 51 in order to ensure a good electrical connection between the two. Compressive means, such as pressure pins or spring washers, can be used to improve the connection between the first element 21 and the second element 22.

In order to further improve the electrical connection between the electromechanical connecting element 50 and the electrical connecting element 51, the portions of the first element 20 and the second element 21 facing each other, between which the electromechanical connecting element 50 and the electrical connecting element 51 are inserted, are preferably configured to facilitate the electrical connection. For example, such portions may be lined with conductive material.

Preferably, in detail, the first element 21 and the third element 23 of the main body 20 are configured to attach a first portion of the first electrical connecting element 50 to each other. According to this aspect, the first element 21 may include at least one protuberance 21a configured to be accommodated by at least one recess 23a of the third element 23. In this way, an effective coupling is achieved between the electromechanical connecting element 50 and the main body 20. In addition, the first element 21 and the second element 22 are configured to attach a second portion of the electromechanical connecting element 50 to each other. In other words, the electromechanical connecting element 50 includes a first portion directly interposed between the first and third elements 21, 23 of the main body 20, and a second portion directly interposed between the first and second elements 21, 22 of the main body 20.

Preferably, lateral movements of the electromechanical connecting element 50 are prevented by the presence of at least two connecting means 25, 26 between the first, second and third elements 21, 22, 23 of the main body 20, wherein said at least two connecting means 25, 26 are each configured to be disposed laterally, in use, to the first electrical connecting element 50. In other words, in use, the electromechanical connecting element 50 is interposed between said at least two connecting means 25, 26. Preferably, such connecting means 25, 26 are not in contact with the electromechanical connecting element 50.

Preferably, the electromechanical connecting element 50 is also attached to an additional connecting means 27 between the first, second and third elements 21, 22, 23 of the main body 20. As such, such additional connecting means 27 are made of non-conductive material. What is important is that the portion of first electrical connecting element 50 inserted within main body 20 is made of electrically conductive material.

The additional connecting means 27 between the first, second and third elements 21, 22, 23 of the main body 20 is also configured for a connection with the electrical connecting element 51. Preferably, such a connection is made through a ring connector associated with the electrical connecting element 51, through which the additional connecting means 27 can be inserted. Further, such additional connecting means 27 is configured to provide electrical contact between the electromechanical connecting element 50 and the electrical connecting element 51. In order to further improve the electrical connection between the electromechanical connecting element and the electrical connecting element 50, 51 through the additional connecting means 27, a washer made of a non-conductive material, preferably a spring material, may be added to the additional electrical connecting means 27 in order to increase the mechanical compressive load acting on the electromechanical connecting element and the electrical connecting element 50, 51. In combination or alternatively, the damper device 100 may comprise a spring-loaded pin which advantageously ensures the electrical connection between the electromechanical connecting element and the electrical connecting element 50, 51 even in the event of vibration and possible reduction of the preload of the further electrical connecting means 27.

The present disclosure further relates to a connecting apparatus 1000 configured to mechanically and electrically connect a first satellite module 200 and a second satellite module 300.

In describing such a connecting apparatus 1000, the elements of the first satellite module 200, the second satellite module 300, the damper device 100, the connecting cable 10, and the first and second electrical connecting elements 50, 51 having the same function and structure as the previously described elements retain the same reference number and are not described in detail again.

In detail, the connecting apparatus 1000 includes a damper device 100 as previously described. Said damper device 100 is mechanically coupled to the first satellite module 200. The connecting apparatus 1000 further includes at least one connecting cable 10 configured to connect the damper device 100 to the second satellite module 300 and to support a mechanical load. The connecting apparatus 1000 further includes an electromechanical connecting element 50 configured to electrically connect the second satellite module 300 with the damper device 100 and an electrical connecting element 51 configured to electrically connect the first satellite module 200 with the damper device 100.

The present invention, described according to preferred forms of embodiment, makes it possible to achieve the task and purposes set forth for overcoming the limitations of the known technique.

The subject matter of the present disclosure has thus far been described with reference to its forms of embodiment. It is to be understood that there may be other forms of embodiment pertaining to the same inventive core, all of which fall within the scope of protection of the claims set forth below.

## Claims

1. Damper device (100) configured to dissipate energy from at least one connecting cable (10) configured for connecting a first satellite module (200) and a second satellite module (300), said damper device (100) being configured for a mechanical and electrical connection between said first satellite module (200) and said second satellite module (300), said damper device (100) comprising a main body (20) configured to be coupled to an end portion (11) of said connecting cable (10), said main body (20) of said damper device (100) comprising an elastic element (30) configured to assume at least a first configuration, or elongated configuration, and a second configuration, or contracted configuration, said elastic element (30) being associated with said end portion (11) of said connecting cable (10), said main body (20) defining a groove (40), or recess, configured to accommodate said elastic element (30), said elastic element (30) being at least partially slidable in said groove (40), or recess, the main body (20) being further configured to be coupled to at least one electrical connecting element (50, 51) configured to electrically connect said first satellite module (200) with said second satellite module (300), wherein said groove (40), or recess, has a curvilinear, or non-rectilinear, shape, or is conformed as a hook or question mark.

2. Damper device (100) according to claim 1, wherein said elastic element (30) is slidable in said groove (40) between said first configuration, or elongated configuration, wherein said elastic element (30) occupies a first space of said groove (40), or recess, and said second configuration, or contracted configuration, wherein said elastic element (30) occupies a second space of said groove (40), said second space being smaller than said first space.

3. Damper device (100) according to claim 1 or 2, wherein said elastic element (30) comprises a first end portion (31) constrained to said groove (40) and a second end portion (32) configured to slide in said groove (40), said second end portion (32) of said elastic element (30) being associated with said end portion (11) of said connecting cable (10).

4. Damper device (100) according to the preceding claim, wherein said elastic element (30) is associated with at least one sliding element (35), said at least one sliding element (35) being associated with said second end portion (32) of said elastic element (30) and being configured to promote a sliding of said second end portion (32) of said elastic element (30) in said groove (40), or recess.

5. Damper device (100) according to any one of the preceding claims, wherein said main body (20) is a multilayer body comprising a first element (21), a second element (22) and a third element (23) superimposed on each other, wherein said second element (22) is interposed between said first element (21) and said third element (23).

6. Damper device (100) according to the preceding claim, wherein said second element (22) and said third element (23) are coupled to each other and configured to mechanically connect a first satellite module (200) to a second satellite module (300) through said connecting cable (10) and to dissipate energy from said connecting cable (10), and wherein said first element (21) and said second element (22) are coupled to each other and configured to electrically connect a first satellite module (200) to a second satellite module (300) through at least one electrical connecting element (50, 51).

7. Damper device (100) according to the preceding claim, wherein said second element (22) and said third element (23) define said groove (40), or recess, configured to accommodate said elastic element (30).

8. Damper device (100) according to claim 6 or 7, wherein, an electromechanical connecting element (50) configured to connect a first satellite module (200) to said damper device (100) and an electrical connecting element (51) configured to connect said damper device (100) to a second satellite module (300) are interposed between said first element (21) and said second element (22), said first element (21) and said second element (22) being configured to provide a contact between said electromechanical connecting element (50) and said electrical connecting element (51).

9. Connecting apparatus (1000) between a first satellite module (200) and a second satellite module (300), comprising a damper device (100) according to any one of the preceding claims mechanically coupled to said first satellite module (200), a connecting cable (10) configured to mechanically connect said damper device (100) with said second satellite module (300) and to support a mechanical load, an electromechanical connecting element (50) configured to electrically and mechanically connect said first satellite module (200) with said damper device (100) and an electrical connecting element (51) configured to electrically connect said second satellite module (300) with said damper device (100).

## Patentansprüche

1. Dämpfervorrichtung (100), die konfiguriert ist, um Energie von mindestens einem Verbindungskabel (10) abzuleiten, das zum Verbinden eines ersten Satellitenmoduls (200) und eines zweiten Satellitenmoduls (300) konfiguriert ist, wobei die Dämpfervorrichtung (100) für eine mechanische und elektrische Verbindung zwischen dem ersten Satellitenmodul (200) und dem zweiten Satellitenmodul (300) konfiguriert ist, die Dämpfervorrichtung (100) umfassend einen Hauptkörper (20), der konfiguriert ist, um mit einem Endabschnitt (11) des Verbindungskabels (10) gekoppelt zu werden, der Hauptkörper (20) der Dämpfervorrichtung (100) umfassend ein elastisches Element (30), das konfiguriert ist, um mindestens eine erste Konfiguration oder eine gestreckte Konfiguration und eine zweite Konfiguration oder eine zusammengezogene Konfiguration einzunehmen, wobei das elastische Element (30) mit dem Endabschnitt (11) des Verbindungskabels (10) verknüpft ist, wobei der Hauptkörper (20) eine Nut (40) oder eine Aussparung definiert, die konfiguriert ist, um das elastische Element (30) aufzunehmen, wobei das elastische Element (30) mindestens teilweise in der Nut (40) oder der Aussparung verschiebbar ist, wobei der Hauptkörper (20) ferner konfiguriert ist, um mit mindestens einem elektrischen Verbindungselement (50, 51) gekoppelt zu werden, das konfiguriert ist, um das erste Satellitenmodul (200) mit dem zweiten Satellitenmodul (300) elektrisch zu verbinden, wobei die Nut (40) oder die Aussparung eine gekrümmte oder nicht geradlinige Form aufweist oder die Form eines Hakens oder Fragezeichens hat.

2. Dämpfervorrichtung (100) nach Anspruch 1, wobei das elastische Element (30) in der Nut (40) zwischen der ersten Konfiguration oder der gestreckten Konfiguration, in der das elastische Element (30) einen ersten Raum der Nut (40) oder der Aussparung belegt, und der zweiten Konfiguration oder der zusammengezogenen Konfiguration, in der das elastische Element (30) einen zweiten Raum der Nut (40) belegt, der kleiner als der erste Raum ist, verschiebbar ist.

3. Dämpfervorrichtung (100) nach Anspruch 1 oder 2, wobei das elastische Element (30) einen ersten Endabschnitt (31), der an der Nut (40) befestigt ist, und einen zweiten Endabschnitt (32) umfasst, der konfiguriert ist, um sich in der Nut (40) zu verschieben, wobei der zweite Endabschnitt (32) des elastischen Elements (30) mit dem Endabschnitt (11) des Verbindungskabels (10) verknüpft ist.

4. Dämpfervorrichtung (100) nach dem vorstehenden Anspruch, wobei das elastische Element (30) mit mindestens einem Schiebeelement (35) verknüpft ist, wobei das mindestens eine Schiebeelement (35) mit dem zweiten Endabschnitt (32) des elastischen Elements (30) verknüpft ist und konfiguriert ist, um ein Verschieben des zweiten Endabschnitts (32) des elastischen Elements (30) in der Nut (40) oder der Aussparung zu unterstützen.

5. Dämpfervorrichtung (100) nach einem der vorstehenden Ansprüche, wobei der Hauptkörper (20) ein mehrschichtiger Körper ist, umfassend ein erstes Element (21), ein zweites Element (22) und ein drittes Element (23), die einander überlagert sind, wobei das zweite Element (22) zwischen dem ersten Element (21) und dem dritten Element (23) angeordnet ist.

6. Dämpfervorrichtung (100) nach dem vorstehenden Anspruch, wobei das zweite Element (22) und das dritte Element (23) miteinander gekoppelt sind und konfiguriert sind, um ein erstes Satellitenmodul (200) über das Verbindungskabel (10) mit einem zweiten Satellitenmodul (300) mechanisch zu verbinden und um Energie von dem Verbindungskabel (10) abzuleiten, und wobei das erste Element (21) und das zweite Element (22) miteinander gekoppelt sind und konfiguriert sind, um ein erstes Satellitenmodul (200) über mindestens ein elektrisches Verbindungselement (50, 51) mit einem zweiten Satellitenmodul (300) elektrisch zu verbinden.

7. Dämpfervorrichtung (100) nach dem vorstehenden Anspruch, wobei das zweite Element (22) und das dritte Element (23) die Nut (40) oder die Aussparung definieren, die konfiguriert ist, um das elastische Element (30) aufzunehmen.

8. Dämpfervorrichtung (100) nach Anspruch 6 oder 7, wobei zwischen dem ersten Element (21) und dem zweiten Element (22) ein elektromechanisches Verbindungselement (50), das konfiguriert ist, um ein erstes Satellitenmodul (200) mit der Dämpfervorrichtung (100) zu verbinden, und ein elektrisches Verbindungselement (51), das konfiguriert ist, um die Dämpfervorrichtung (100) mit einem zweiten Satellitenmodul (300) zu verbinden, angeordnet sind, wobei das erste Element (21) und das zweite Element (22) konfiguriert sind, um einen Kontakt zwischen dem elektromechanischen Verbindungselement (50) und dem elektrischen Verbindungselement (51) bereitzustellen.

9. Verbindungseinrichtung (1000) zwischen einem ersten Satellitenmodul (200) und einem zweiten Satellitenmodul (300), umfassend eine Dämpfervorrichtung (100) nach einem der vorstehenden Ansprüche, die mit dem ersten Satellitenmodul (200) mechanisch gekoppelt ist, ein Verbindungskabel (10), das konfiguriert ist, um die Dämpfervorrichtung (100) mit dem zweiten Satellitenmodul (300) mechanisch zu verbinden und um eine mechanische Last zu tragen, ein elektromechanisches Verbindungselement (50), das konfiguriert ist, um das erste Satellitenmodul (200) mit der Dämpfervorrichtung (100) elektrisch und mechanisch zu verbinden, und ein elektrisches Verbindungselement (51), das konfiguriert ist, um das zweite Satellitenmodul (300) mit der Dämpfervorrichtung (100) elektrisch zu verbinden.

## Revendications

1. Dispositif amortisseur (100) configuré pour dissiper l'énergie depuis au moins un câble de liaison (10) conçu pour la liaison d'un premier module satellite (200) et d'un second module satellite (300), ledit dispositif amortisseur (100) étant configuré pour une connexion mécanique et électrique entre ledit premier module satellite (200) et ledit second module satellite (300), ledit dispositif amortisseur (100) comprenant un corps principal (20) conçu pour être accouplé à une partie d'extrémité (11) dudit câble de liaison (10), ledit corps principal (20) dudit dispositif amortisseur (100) comprenant un élément élastique (30) conçu pour assumer au moins une première configuration, ou configuration allongée, et une seconde configuration, ou configuration contractée, ledit élément élastique (30) étant associé à ladite partie d'extrémité (11) dudit câble de liaison (10), ledit corps principal (20) définissant une rainure (40), ou renfoncement, conçu pour accueillir ledit élément élastique (30), ledit élément élastique (30) étant au moins partiellement coulissant dans ladite rainure (40), ou renfoncement, le corps principal (20) étant en outre configuré pour être couplé à au moins un élément de connexion électrique (50, 51) configuré pour connecter électriquement ledit premier module satellite (200) avec ledit second module satellite (300), dans lequel ladite rainure (40), ou renfoncement, a une forme curviligne, ou non rectiligne, ou est réalisée sous forme de crochet ou de point d'interrogation.

2. Dispositif amortisseur (100) selon la revendication 1, dans lequel ledit élément élastique (30) est coulissant dans ladite rainure (40) entre ladite première configuration, ou configuration allongée, dans lequel ledit élément élastique (30) occupe un premier espace de ladite rainure (40), ou renfoncement, et ladite seconde configuration, ou configuration contractée, dans lequel ledit élément élastique (30) occupe un second espace de ladite rainure (40), ledit second espace étant plus petit que ledit premier espace.

3. Dispositif amortisseur (100) selon la revendication 1 ou 2, dans lequel ledit élément élastique (30) comprend une première partie d'extrémité (31) contrainte à ladite rainure (40) et une seconde partie d'extrémité (32) conçue pour coulisser dans ladite rainure (40), ladite seconde partie d'extrémité (32) dudit élément élastique (30) étant associée à ladite partie d'extrémité (11) dudit câble de liaison (10).

4. Dispositif amortisseur (100) selon la revendication précédente, dans lequel ledit élément élastique (30) est associé à au moins un élément coulissant (35), ledit au moins un élément coulissant (35) étant associé à ladite seconde partie d'extrémité (32) dudit élément élastique (30) et étant conçu pour favoriser un glissement de ladite seconde partie d'extrémité (32) dudit élément élastique (30) dans ladite rainure (40), ou renfoncement.

5. Dispositif amortisseur (100) selon l'une quelconque des revendications précédentes, dans lequel ledit corps principal (20) est un corps multicouche comprenant un premier élément (21), un deuxième élément (22) et un troisième élément (23) superposés, dans lequel ledit deuxième élément (22) est interposé entre ledit premier élément (21) et ledit troisième élément (23).

6. Dispositif amortisseur (100) selon la revendication précédente, dans lequel ledit deuxième élément (22) et ledit troisième élément (23) sont accouplés l'un à l'autre et conçus pour relier mécaniquement un premier module satellite (200) à un second module satellite (300) à travers ledit câble de liaison (10) et pour dissiper l'énergie depuis ledit câble de liaison (10), et dans lequel ledit premier élément (21) et ledit deuxième élément (22) sont couplés l'un à l'autre et configurés pour connecter électriquement un premier module satellite (200) à un second module satellite (300) à travers au moins un élément de connexion électrique (50, 51).

7. Dispositif amortisseur (100) selon la revendication précédente, dans lequel ledit deuxième élément (22) et ledit troisième élément (23) définissent ladite rainure (40), ou renfoncement, conçue pour accueillir ledit élément élastique (30).

8. Dispositif amortisseur (100) selon la revendication 6 ou 7, dans lequel, un élément de connexion électromécanique (50) configuré pour connecter un premier module satellite (200) audit dispositif amortisseur (100) et un élément de connexion électrique (51) configuré pour connecter ledit dispositif amortisseur (100) à un second module satellite (300) sont interposés entre ledit premier élément (21) et ledit deuxième élément (22), ledit premier élément (21) et ledit deuxième élément (22) étant configurés pour fournir un contact entre ledit élément de connexion électromécanique (50) et ledit élément de connexion électrique (51).

9. Appareil de connexion (1000) entre un premier module satellite (200) et un second module satellite (300), comprenant un dispositif amortisseur (100) selon l'une quelconque des revendications précédentes accouplé mécaniquement audit premier module satellite (200), un câble de liaison (10) conçu pour relier mécaniquement ledit dispositif amortisseur (100) audit second module satellite (300) et pour supporter une charge mécanique, un élément de connexion électromécanique (50) configuré pour connecter électriquement et mécaniquement ledit premier module satellite (200) avec ledit dispositif amortisseur (100) et un élément de connexion électrique (51) configuré pour connecter électriquement ledit second module satellite (300) avec ledit dispositif amortisseur (100).
